(19) Europäisches Patentamt
European Patent Office
Office européen des brevets

(11) Veröffentlichungsnummer: **0 065 739**
**B1**

(12) **EUROPÄISCHE PATENTSCHRIFT**

(45) Veröffentlichungstag der Patentschrift: **11.07.84**

(51) Int. Cl.³: **C 07 F 9/38**, C 07 F 9/40

(21) Anmeldenummer: **82104335.3**

(22) Anmeldetag: **18.05.82**

(54) **Verfahren zur Herstellung von Vinylphosphonsäure.**

(30) Priorität: **22.05.81 DE 3120437**

(43) Veröffentlichungstag der Anmeldung:
**01.12.82 Patentblatt 82/48**

(45) Bekanntmachung des Hinweises auf die Patenterteilung:
**11.07.84 Patentblatt 84/28**

(84) Benannte Vertragsstaaten:
**BE CH DE FR GB IT LI NL**

(56) Entgegenhaltungen:
**EP - A - 0 032 663**
**FR - A - 2 283 145**

**CHEMICAL ABSTRACTS, Band 78, Nr. 5, 5. Februar 1973, Seite 517, Nr. 29900q, Columbus, Ohio, USA**
**G.M. KOSLAPOFF and L. MAIER: "Organic phosphorus compounds", Band 7, 1976, John Wiley & Sons, New York, USA, Seite 22**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr., Altkönigstrasse 11a, D-6242 Kronberg/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Reine Vinylphosphonsäure kann bekanntlich aus Vinylphosphonsäuredichlorid gewonnen werden. Die Synthese von reinem Vinylphosphonsäuredichlorid ist aber technisch aufwendig. Erwünscht ist deshalb ein einfacheres Verfahren zur Herstellung von Vinylphosphonsäure.

Es wurde nun gefunden, dass man auf einfache und wirtschaftliche Weise Vinylphosphonsäure herstellen kann, indem man 2-Acetoxyethanphosphonsäuredialkylester der Formel

$$CH_3COOCH_2CH_2\overset{\overset{\displaystyle O}{\|}}{P}(OR)_2,$$

worin R Alkylgruppen mit 1 bis 4, bevorzugt 1 bis 2 Kohlenstoffatomen bedeutet, in Gegenwart saurer oder basischer Katalysatoren auf 150 bis 270°C, vorzugsweise 170 bis 230°C, erhitzt, das anfallende Reaktionsprodukt mit Orthoestern der allgemeinen Formel

$$R'C(OR)_3$$

worin R' Wasserstoff, $C_1$–$C_4$-Alkyl oder $C_1$–$C_4$-Alkoxy bedeutet, R Alkylgruppen mit 1 bis 4, bevorzugt 1 bis 2 Kohlenstoffatomen bedeutet, bei 30 bis 200°C umsetzt und die dabei anfallenden Vinylphosphonsäurediester mit Wasser bei Temperaturen zwischen 130 und 230°C, vorzugsweise zwischen 140 bis 175°C, unter gleichzeitiger Abdestillation der gebildeten Alkohole hydrolysiert.

Es ist überraschend, dass bei diesem Verfahren keine Anlagerung der Orthoester an die Vinylphosphonsäuregruppe erfolgt. Es ist nämlich bekannt, dass sich Orthoester an ungesättigte Verbindungen, wie z.B. Vinylether oder Vinylester, in Gegenwart saurer Katalysatoren anlagern können (Houben-Weyl, Methoden der Organischen Chemie, Band VI/3, S. 247–248, Georg Thieme Verlag Stuttgart, 1965). Als Ausgangsmaterialien kommen z.B. in Frage 2-Acetoxyethanphosphonsäuredimethyl-, -diethyl-, -diisopropyl- und -di-n-butylester. Besonders bevorzugt ist des 2-Acetoxyethanphosphonsäuredimethylester. Als Orthoester kommen insbesondere zum Einsatz Orthoameisensäuretrimethyl-, -triethylester, Orthoessigsäuretrimethyl-, -triethylester, Orthopropionsäuretriethylester, Orthokohlensäuretetramethylester.

Als saure oder basische Katalysatoren kommen zahlreiche Verbindungen in Frage. Als saure Katalysatoren lassen sich verwenden:

a) Schwefelsäure oder Phosphorsäure
b) Halogenhaltige Carbonsäuren mit einem $P_{Ka}$-Wert <2,5, wie Dichloressigsäure, Trichloressigsäure, Trifluoressigsäure
c) Aromatische Sulfonsäuren mit einem $P_{Ka}$-Wert <2,5, wie Benzolsufonsäure, p-Toluolsulfonsäure
d) Bevorzugt Phosphinsäuren mit 2 bis 18 Kohlenstoffatomen wie Dimethylphosphinsäure, Methylethylphosphinsäure, Dioktylphosphinsäure, Methylphenylphosphinsäure, Diphenylphosphinsäure
e) Besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure,2-Acetoxyethanphosphonsäure, 2-Acetoxyethanphosphonsäuremonomethylester, Vinylphosphonsäure, Vinylphosphonsäuremonomethylester, Vinylphosphonsäuremonoethylester, Benzolphosphonsäure
f) Ebenfalls besonders bevorzugt Pyrophosphonsäuren oder deren Halbester wie Methanpyrophosphonsäure, Benzolpyrophosphonsäure, Vinylpyrophosphonsäure, Vinylpyrophosphonsäuremonomethylester
g) Sehr geeignet sind auch die sauren Reaktionsgemische, die beim erfindungsgemässen Verfahren entstehen.

Als basische Katalysatoren lassen sich verwenden:

a) Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin und Tris-(p-diethylaminophenyl)-phosphin und die entsprechenden gemischten Amine, Phosphine, Phospholane und Phospholene wie Dimethylethylamin, Diethylbutylamin, N-Dimethylanilin, 4-Methyl-N-dimethylanilin, N-Diethylanilin, N,N-Tetramethylphenyldiamin oder N-Methylpyrrolidin; Methyldiethylphosphin, Dimethylpropylphosphin, Diethylbenzylphosphin, 1-Methylphospholen-3 und 1-Ethyl-3-methylphospholen-3;
b) Quatäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzyl-ammoniumchlorid, Triethylbenzylammoniumchlorid, Triethylbenzylammoniumbromid, Trimethylbenzylphosphoniumchlorid, Triphenylethylphosphonium-2,4-diaminobenzosulfat;
c) Heterocyclische Verbindungen mit aromatischem Charakter wie Pyridin, Chinolin, ihre verschiedenen Alkyl- und Dialkyl-, vorzugsweise Methyl- bzw. Dimethyl-derivate, Imidazol, N-Vinyl-imidazol, Benzthiazol, 2-Amino-6-ethoxybenzthiazol, ferner Phosphabenzole;
d) Säureamide wie Dimethylformamid, Dimethylformamid, N-Dimethylacetamid, N-Diethylpropionamid, N-Dimethylbenzamid, N-Methyl-pyrrolidon, N,N'-Tetramethylterephthalsäurediamid oder Harnstoffe wie Tetramethylharnstoff und Trimethylphenylharnstoff;
e) Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-1-methylphosphinoxid, Triphenylphosphin-dichlorid, Dimethyldodecylphosphinsulfid, Triphenylphosphinimin, Dimethylchlormethylphosphin-dichlorid, N-2-Dimethylphosphinylethyl-methyl-acetamid, N-2-Dimethylphosphinyl-ethyl-methylamin, Phospholenoxid wie 1-Methylphospholen-1-oxid und 1-Ethyl-3-methyl-phospholen-1-oxid;

f) Amide der phosphinigen und phosphonigen Säuren und der Phosphin- und Phosphonsäuren sowie ihrer Thionanaloga, wie Ethanphosphonsäure-bis-diethylamid, Methan-butan-phosphinigsäure-dimethylamid, Diethylphosphinigsäure-iso-butylamid. Ferner Triamide der Phosphor- und der Thiophosphorsäure wie Hexamethylphosphorsäure-triamid.

Die Katalysatoren werden in Mengen von 0,01 bis 10, bevorzugt 0,1 bis 5 Gew.-% eingesetzt. Bei Verwendung von Vinylphosphonsäure, deren Monoalkylestern oder der bereits gewonnenen sauren Reaktionsgemische können auch grössere Mengen von 10 bis 50 Gew.-% eingesetzt werden.

Das Verfahren wird im allgemeinen so durchgeführt, dass das Ausgangsprodukt mit dem Katalysator vermischt wird und auf die erforderliche Reaktionstemperatur von 150 bis 270°C, vorzugsweise 170 bis 230°C gebracht wird.

Höhere Temperaturen sind möglich, bringen aber keinen Vorteil. Es besteht dann die Gefahr der verstärkten Bildung von Nebenprodukten, aber auch der Polymerisation.

Bei dieser Reaktion spaltet sich Alkylacetat ab, und es entsteht im wesentlichen ein Vinylphosphonsäurehalbester. Das Alkylacetat wird zusammen mit geringen Mengen Alkanol und Dialkylether abdestilliert. Die Destillation erfolgt unter Normaldruck, gegebenenfalls unter Zuhilfenahme eines Inertgases, wie z.B. Stickstoff. Es kann jedoch im Einzelfall vorteilhaft sein, im Vakuum abzudestillieren. Die Abspaltung des Alkylacetats ist nach 2 bis etwa 20 Stunden beendet. Es kann zweckmässig sein, danach noch 1 bis 4 Stunden bei der Reaktionstemperatur nachzurühren. Das Verfahren kann auch kontinuierlich gestaltet werden. Zur Verhinderung einer Polymerisation ist es von Vorteil, entsprechende Inhibitoren wie z.B. Hydrochinon, Hydrochinonmonomethylether oder Phenothiazin, zuzusetzen.

Geht man von 2-Acetoxyethanposphonsäurediestern aus, die von ihrer Herstellung her mit geringen Mengen des entsprechenden Monoesters verunreinigt sind, ist ein weiterer Zusatz eines Katalysators nicht notwendig. Es ist dabei zweckmässig, die Reaktion bei etwa 250°C zu beginnen. Wenn sich dann das saure Reaktionsprodukt, das ja ebenfalls als Katalysator für die Reaktion wirkt, in genügendem Ausmass gebildet hat, kann man das Verfahren bei tieferen Temperaturen, beispielsweise bei 180 bis 220°C, weiterführen.

Der in der ersten Stufe entstehende rohe Vinylphosphonsäurehalbester wird mit den Orthoestern bei 30 bis 200°C umgesetzt unter gleichzeitiger Bildung von Carbonsäureestern bzw. Kohlendioxid und den entsprechenden Alkoholen. Bei der Bildung der Carbonsäureester und der Alkohole ist es zweckmässig, in einem solchen Temperaturbereich zu arbeiten, dass die Carbonsäureester und die Alkohole im Zuge ihrer Bildung abdestillieren. Bezogen auf den Vinylphosphonsäurehalbester werden in der Regel mindestens ein Mol Orthoester eingesetzt, bevorzugt 1,5 bis 2 Mol. Weitere Überschüsse ergeben keinen wesentlichen Vorteil. Eine besonders zweckmässige Methode der Umsetzung besteht darin, den Halbester mit etwa der gleichen Menge an fertigem Vinylphosphonsäurediester, wie er als Reaktionsprodukt anfällt, zu mischen und etwa 1 Stunde bei erhöhter Temperatur, z.B. 160°C, zu belassen und dann dieses Reaktionsgemisch mit dem Orthoester umzusetzen. Bei dieser Verfahrensweise ist der sonst zu beobachtende Zwangsanfall an Dialkylether geringfügig und die Ausnutzung des Alkylierungspotentials des Orthoesters optimal. Man kann auch den rohen Vinylphosphonsäurehalbester mit dem Orthoester mischen, wobei der Orthoester vorgelegt und der Vinylphosphonsäurehalbester zudosiert wird oder umgekehrt und bei der jeweils erforderlichen Reaktionstemperatur abreagieren lassen. Bei Verwendung von Orthokohlensäureestern liegt diese Reaktionstemperatur bei ca. 30 bis 90°C, während beim Ameisensäureorthoester und den höheren Carbonsäureorthoestern eine Temperatur von ca. 30 bis 160°C erforderlich ist. Das Verfahren kann auch kontinuierlich gestaltet werden.

Die bei dem vorliegenden Verfahren anfallenden Vinylphosphonsäurediester werden gegebenenfalls durch Destillation gereinigt. Sie enthalten in der Regel geringe Mengen an Trialkylphosphaten, die gegebenenfalls durch geeignete Verfahren, z.B. Destillationsverfahren, abtrennbar sind.

Die nach diesem Verfahrensschritt hergestellten Vinylphosphonsäuredialkylester werden nun gegebenenfalls zusammen mit den Trialkylphosphaten bei der erforderlichen Reaktionstemperatur mit Wasser umgesetzt, wobei der entstehende Alkohol zweckmässig über eine Kolonne abdestilliert wird. Es können sich dabei geringe Mengen Dialkylether und Olefine bilden. Die Umsetzung mit Wasser ist beendet, wenn kein Alkohol mehr abgespalten wird. Dabei kann es vorteilhaft sein, gegen Ende der Umsetzung grössere Mengen Wasser zuzusetzen und einen Teil des nicht umgesetzten Wassers mit dem Alkohol abzudestillieren. Der verfahrensgemäss zu wählende Druck ist nicht kritisch, jedoch wird das Verfahren bevorzugt bei etwa Atmosphärendruck durchgeführt. Auch bei dieser Verfahrensstufe ist es vorteilhaft, dem Vinylphosphonsäuredimethylester vor der Hydrolyse etwas von dem Endprodukt, nämlich der Vinylphosphonsäure, zuzumischen.

Die Reaktionstemperaturen bei diesem Verfahrensschritt liegen bei 130 bis 230°C. Bevorzugt wird im Temperaturbereich 140 bis 175°C gearbeitet. Die Wasserumsetzung kann auch kontinuierlich durchgeführt werden. Die anfallende Vinylphosphonsäure kann im Vakuum bei erhöhter Temperatur von geringeren Mengen gelösten Wassers befreit werden. Sie enthält als Nebenbestandteil Phosphorsäure, wenn nicht vor der Hydrolyse das Trialkylphosphat von dem Vinylphosphonsäurediester abgetrennt worden war. Man kann die Phosphorsäure von der Vinylphosphonsäure über die Salze trennen.

Vinylphosphonsäure ist geeignet als Korrosionsschutzmittel in wässrigen Systemen, insbesondere auch als Zwischenprodukt zur Herstellung von Mitteln zur Flammhemmung. Weiterhin kann sie in die Polyvinylphosphonsäure übergeführt werden, die eine breite technische Anwendung hat.

Beispiel 1

100 g 2-Acetoxyethanphosphonsäuredimethylester werden unter Rühren auf 220 bis 230°C erhitzt. Dazu wird während 6 Stunden ein Gemisch von 200 g 2-Acetoxyethanphosphonsäuredimethylester und 3 g 4-(Dimethylamino)-pyridin zugetropft, gleichzeitig destillieren 112 g Methylacetat ab. In einer der Apparatur nachgeschalteten Kühlfalle sammeln sich 6 g Dimethylether. Es verbleiben 171 g eines rohen Vinylphosphonsäuremonoethylesters. Diese werden mit 200 g Orthoessigsäuremethylester gemischt und während 4,5 Stunden langsam bis zu einer Innentemperatur von 150°C unter Rühren erhitzt, während ein Gemisch von Methanol und Methylacetat abdestilliert. Dann werden bei Raumtemperatur erneut 70 g Orthoessigsäuretrimethylester zugesetzt (Molverhältnis Vinylphosphonsäuremonomethylester: Orthoester beträgt ca. 1:1,6) und wieder langsam auf 150°C unter Abdestillation von Methylacetat und Methanol erhitzt. Insgesamt erhält man 192 g eines Gemisches von Methanol und Methylacetat. Der Rückstand wird dabei 0,5 Torr (0,67 mbar) destilliert. Man erhält 172 g Vinylphosphonsäuredimethylester, der 7% Trimethylphosphat auf Grund eines $^{31}$P-NMR-Spektrums enthält. Diese 172 g Vinylphosphonsäuredimethylester werden mit 17 g Vinylphosphonsäure gemischt und auf 160 bis 175°C unter Rühren erhitzt. Gleichzeitig wird Wasser zudosiert, während über eine Silbermantelkolonne Methanol abdestilliert. In einer der Apparatur nachgeschalteten Kühlfalle sammeln sich 12 g Dimethylether. Nach etwa 7 Stunden wird bei 90°C und 0,5 Torr (0,67 mbar) im Reaktionsgemisch enthaltendes Wasser abdestilliert. Es verbleiben 153 g Vinylphosphonsäure mit einem Gehalt von 7% Phosphorsäure und 2% der Verbindung

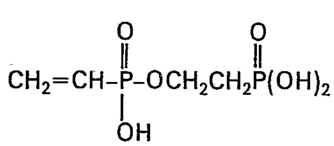

gemessen auf Grund des $^{31}$P-NMR-Spektrums.

Beispiel 2

350 g Vinylphosphonsäuredimethylester, wie er in Beispiel 1 hergestellt wurde, und 35 g Vinylphosphonsäure werden gemischt und auf 145°C unter Rühren erhitzt. Nun wird Wasser während 14 Stunden zudosiert, während über eine Silbermantelkolonne Methanol abdestilliert. In einer der Apparatur nachgeschalteten Kühlfalle sammeln sich 3 g Dimethylether. Anschliessend wird bei 90°C und 0,5 Torr (0,67 mbar) im Reaktionsgemisch enthaltendes Wasser abdestilliert. Es verbleiben 310 g Vinylphosphonsäure.

**Patentansprüche**

1. Verfahren zur Herstellung von Vinylphosphonsäure, dadurch gekennzeichnet, dass man 2-Acetoxyethanphosphonsäuredialkylester der allgemeinen Formel

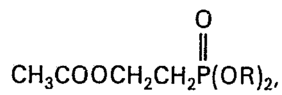

worin R Alkylgruppen mit 1 bis 4 Kohlenstoffatomen bedeutet, in Gegenwart saurer oder basischer Katalysatoren auf 150 bis 270°C erhitzt, das anfallende Reaktionsprodukt mit Orthoestern der allgemeinen Formel

worin R′ Wasserstoff, $C_1$–$C_4$-Alkyl oder $C_1$–$C_4$-Alkoxy bedeutet, R Alkylgruppen mit 1 bis 4, bevorzugt 1 bis 2 Kohlenstoffatomen bedeutet, bei 30 bis 200°C umsetzt und die dabei anfallenden Vinylphosphonsäurediester mit Wasser bei Temperaturen zwischen 130 und 230°C unter gleichzeitiger Abdestillation der gebildeten Alkohole hydrolysiert.

2. Verfahren nach Anspruch 1, dadurch gekennzeichnet, dass man den 2-Acetoxyethanphosphonsäuredialkylester auf eine Temperatur von 170 bis 230°C erhitzt.

3. Verfahren nach Anspruch 1, dadurch gekennzeichnet, dass man den Vinylphosphonsäurediester bei Temperaturen zwischen 140 und 175°C hydrolisiert.

**Revendications**

1. Procédé de préparation de l'acide vinylphosphonique, procédé caractérisé en ce qu'on chauffe un acétoxy-2 éthane-phosphonate de dialkyle répondant à la formule générale:

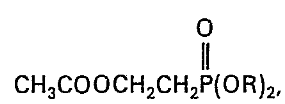

dans laquelle R représente un radical alkyle contenant de 1 à 4 atomes de carbone, en présence de catalyseurs acides ou basiques, à des températures de 150 à 270°C, on fait réagir le produit réactionnel qui s'est alors formé avec des orthoesters répondant à la formule générale

$R'C(OR)_3$

dans laquelle R' représente l'hydrogène, un alkyle en $C_1$–$C_4$ ou un alcoxy en $C_1$–$C_4$ et R représente un alkyle contenant de 1 à 4 atomes de carbone, de préférence 1 ou 2, à des températures de 30 à 200°C, et on hydrolyse les diesters vinylphosphoniques qui se sont alors formés, au moyen d'eau, à des températures comprises entre 130 et 230°C, en même temps qu'on chasse par distillation les alcools formés.

2. Procédé selon la revendication 1, caractérisé en ce qu'on chauffe l'acétoxy-2 éthane-phosphonate de dialkyle à une température de 170 à 230°C.

3. Procédé selon la revendication 1, caractérisé en ce qu'on hydrolyse le diester vinylphosphonique à des températures comprises entre 140 et 175°C.

**Claims**

1. A process for preparing vinylphosphonic acid, which is characterized by heating dialkyl 2-acetoxyethanephosphonates of the general formula

$$CH_3COOCH_2CH_2\overset{O}{\overset{\|}{P}}(OR)_2,$$

in which R denotes alkyl groups having 1 to 4 carbon atoms, at 150 to 270°C in the presence of acid or basic catalysts, reacting the resulting reaction product with orthoesters of the general formula

$R'C(OR)_3$

in which R' denotes hydrogen, $C_1$–$C_4$-alkyl or $C_1$–$C_4$-alkoxy and R denotes alkyl groups having 1 to 4, preferably 1 to 2, carbon atoms, at 30 to 200°C and hydrolyzing the resulting vinylphosphonic acid diesters with water at temperatures between 130 and 230°C while simultaneously distilling off the alcohols formed.

2. The process as claimed in claim 1, wherein the dialkyl 2-acetoxyethanephosphonate is heated at a temperature of 170 to 230°C.

3. The process as claimed in claim 1, wherein the vinylphosphonic acid diester is hydrolyzed at temperatures between 140 and 175°C.